Europäisches Patentamt

European Patent Office

Office européen des brevets

(11) Publication number: **0 061 224**
**B1**

(12) **EUROPEAN PATENT SPECIFICATION**

(45) Date of publication of patent specification: **15.01.86**

(21) Application number: **82200324.0**

(22) Date of filing: **11.03.82**

(51) Int. Cl.⁴: **H 04 L 1/18, H 04 L 11/06**

(54) **System for radio teleprinter traffic.**

(30) Priority: **12.03.81 NL 8101213**

(43) Date of publication of application:
**29.09.82 Bulletin 82/39**

(45) Publication of the grant of the patent:
**15.01.86 Bulletin 86/03**

(84) Designated Contracting States:
**BE CH DE FR GB LI SE**

(56) References cited:
**DE-A-2 452 699**
**GB-A-1 528 214**

**PHILIPS TELECOMMUNICATION REVIEW, vol.
35, no. 4, December 1977, pages 186-199,
Hilversum (NL); R. AZIMULLAH et al: " Simplex
TOR STB 750 for world-wide radio telegraph
communication".**

(73) Proprietor: **Staat der Nederlanden
(Staatsbedrijf der Posterijen, Telegrafie en
Telefonie)
P.O. Box 430
NL-2260 AK Leidschendam (NL)**

(72) Inventor: **Da Silva, Herman
34 Agrippinastraat
NL-2275 VC Voorburg (NL)**

## Description

The invention relates to a simplex system for digital radio communication via ARQ-circuits, comprising

— a calling transmitting-receiving station which every time transmits blocks of three signals, which blocks during the establishment of a connection together comprise inter alia four signals constituting an identification code of
— a called transmitting-receiving station which every time transmits one signal during the establishment of a connection after the recognition of the identification code belonging to this called station, and

wherein during the establishment of the connection the calling station every time transmits one block of three signals on receipt of every time one signal transmitted by the called station, these signals comprising inter alia the identification code of the called station.

Such a system is known from GB—A—1 528 214. In this known system according to CCIR-Recommendation 476-2 the calling station is always the master station, starting each communication, and the called station is the slave station. After the loss of synchronization the calling station starts again transmitting blocks of three signals, comprising the identification code of the called station. The called station, which wants to continue the original communication rather than starting a communication with another calling station, has to verify the identity of the calling station.

A problem of the known system is that the called station, being a slave station, has no possibilities to transmit other messages than those for requesting the next block of signals or to repeat the last block of signals in case this block has been received mutilated. The third signal that can be transmitted by the called station is a request to change the master-slave functions of the two stations. After changing the master-slave functions the called station can ask the calling station for its identification code in order to verify that the communication is continued with the original station. This procedure is very time-absorbing due to the long propagation times of this kind of communications.

According to the invention a solution is offered for said problem in that the called station transmits on receipt of the blocks comprising the identification code of the called station, a single special signal before transmitting the signals constituting its identification code, in that on receipt of this special signal the calling station transmits a special block of signals, and in successive blocks signals which together constitute the identification code of the calling station.

Another advantage of this solution is that calling stations equipped with this feature can co-operate with called stations which are not equipped with this feature.

The exchanging of identification codes per se is generally known and is exemplified by DE—A—2 452 699. It is, however, not readily apparent how to realize this in a consistent way after the loss of communication between two stations in an ARQ-system.

In addition the invention provides a transmitting-receiving device comprising means allowing the device to function in a system as described above, and moreover can be cooperated, according to said CCIR-recommendation, with transmitting-receiving devices arranged in the way as known so far, be it without the advantages provided by the invention.

The invention provides a system and a transmitting-receiving device enabling a called station to get to know the identity of the calling station considerably quicker than before. After a breakdown of the connection, due to for example atmospherics, the traffic can moreover be continued at the point in the connection where it has stopped, and it can be checked if the desired stations occur in the newly established connection.

The invention will be further elucidated with the aid of the drawing in which:

Fig. 1 shows a time diagram of the signals exchanged during the establishing phase by the two transmitter-receivers of the system according to the invention;

Fig. 2 shows a time diagram of the signals exchanged after an interruption in a connection in the system according to the invention;

Fig. 3 shows a partial block diagram of a transmitter-receiver for the system according to the invention, the transmitting part of which is further worked out;

Fig. 4 shows an elaborate representation of part of a transmitter-receiver according to the invention, and

Fig. 5 shows a partial block diagram of a transmitter-receiver according to Fig. 3, the receiving part of which is further worked out.

As appears from the CCIR-recommendation an information sending station (ISS) always transmits blocks of three signals, whereas an information receiving station (IRS) always transmits single signals. Besides for functional purposes, such as establishing a connection, asking for information and other actions not belonging to the actual transmission of traffic, an ISS-station can make use of four service signal blocks:

| β-β-β | a pause signal indicating that there are no traffic signals; |
| α-α-α | a signal indicating that the connection can be cleared; |
| RQ-RQ-RQ | for a request for repetition of the last traffic signal transmitted by the IRS-station, and |

β-α-β     indicating that the ISS-station wants to become an IRS-station.

In the system according to the invention four service signal blocks are added to said blocks during the calling phase:

RQ-α-α     an order to transmit the characters of the identification code of the IRS-station, to begin with the first character;

RQ-α-β     the same order, but to begin with the second character;

RQ-β-α     the same order, but to begin with the third character;

RQ-β-β     an order to transmit the fourth character of the identification code.

In a similar way the IRS-station can, according to the state of the art, have the disposal of three service signals:

CS 1     a request to the ISS-station to send a signal block with the local numbering 1;

CS 2     the same request, but for a signal block with the local numbering 2, and

CS 3     a request for the transmission of the signal block β-α-β, causing the exchange of functions between ISS and IRS.

During the calling phase the IRS-station in the system according to the invention can moreover have the disposal of the service signals:

α     an order to send a block comprising the first two signals of the identification code of the ISS-station, and

β     a similar order for sending a block with the third and the fourth signal.

In the examples used the calling station will always be indicated by the identification code QEMP and the called station by ZFST.

a. The calling phase

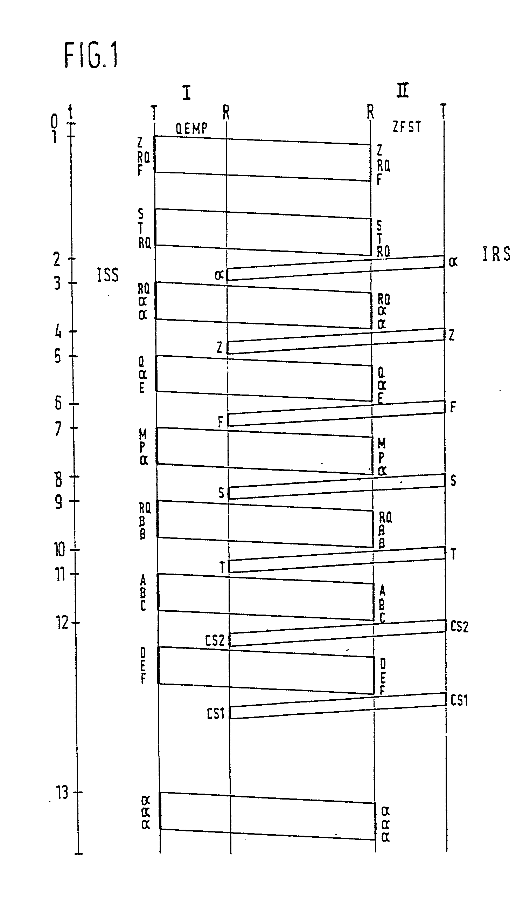

Fig. 1 shows a time diagram of the various signals exchanged for the establishment of the connection.

A first column t indicates a time scale, a second column T the signals transmitted by a transmitter of a first station I, a third column R the signals received by the first station, a fourth column R the signals received by a second station II and a fifth column T the signals transmitted by the transmitter of the second station.

At the moment $t_0$ both stations are in the stand-by position. At the moment $t_1$ the calling station transmits two blocks of three signals each comprising the identification code (ID) of the called station ZFST. The called station checks if this code corresponds with its own code and if this is the case, it will transmit back ($t_2$) one signal α. If the called station transmits back a signal CS 1, the calling station will know that the called station is not equipped with a transmitting-receiving device according to the invention, so that the transmission of traffic signals can be started forthwith ($t_{11}$).

In case the transmitter-receiver of station II is arranged according to the invention, station I will ask, on receipt of the signal α, for the identification code (ID) of station II ($t_3$) by transmitting the block RQ-α-α. Now station II transmits back ($t_4$) the first character of the ID (Z), after which station I repeats its own ID in two blocks ($t_5$ and $t_7$). Station II acknowledges correct receipt of said signal blocks by transmitting the second and the third character of its own ID ($t_6$ and $t_8$). Finally station I transmits the signal block RQ-β-β ($t_9$), which is answered by station II by transmitting the last character of the ID ($t_{10}$).

After station II has transmitted the last character of its own ID, station I transmits a first block of traffic signals ($t_{11}$), whereupon station II answers in the usual way by transmitting the signal CS 2 ($t_{12}$), after which the traffic process will take place according to the known pattern. In the event that station II has answered by transmitting an incorrect ID, station I will transmit the signal block α-α-α ($t_{13}$), in consequence of which the connection will be cleared.

b. Restoration of the connection after an interruption

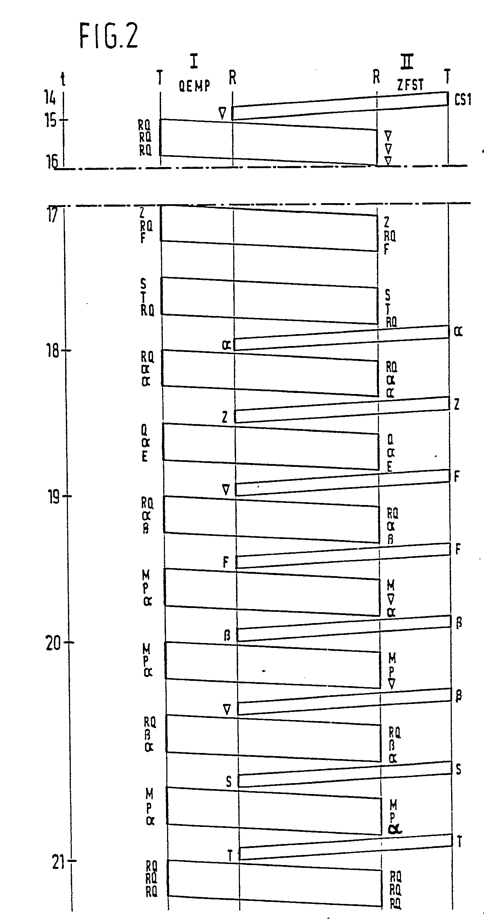

When due to atmospherics for example the signal CS 1 transmitted by station II ($t_{14}$ Fig. 2) is incorrectly received (▽ in column IR), station I will answer by transmitting a block of RQ-signals ($t_{15}$), which, however, in this example will not be received by station II or mutilated as well. Now station I repeats several times the last block transmitted, but does not receive any answer ($t_{16}$). The connection is now broken, but both stations have recorded the ID of the other station in their stores. When the atmospheric conditions have improved, the calling station I will try to restore the connection ($t_{17}$) in the way as set forth in the description belonging to Fig. 1. Errors in the reception are indicated in the figure by the symbol ▽. Such an error will occur for example when station I receives the second character (F) of the ID of station II mutilated ($t_{19}$). Now station I asks for repetition by means of the service signal block RQ-α-β. In a similar way the transmitter II makes use of the special signals α and β ($t_{18}$ and $t_{20}$). After the exchange of the IDs by the two stations and if the IDs correspond with those in their stores, station I will transmit a block of RQ-signals ($t_{21}$), after which the transmitter II will answer by transmitting the last signal (CS 1) transmitted before the breakdown of the connection. If one of the received IDs does not correspond with the ID recorded in the store, the information receiving station will transmit—as the case may be after the exchange of roles—the signal block α-α-α (not shown in the figure). In this way it is prevented that a connection with another station will be established, and it is promoted that an interrupted message will first be fully processed, which will further the efficiency of the traffic.

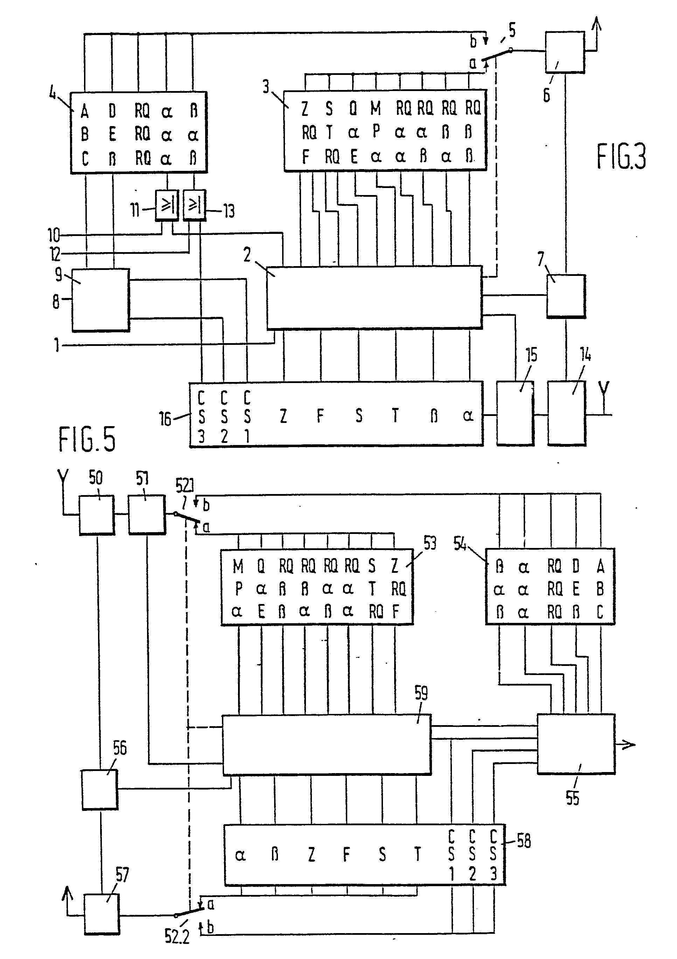

Fig. 3 shows a block diagram of a transmitter-receiver of an information sending station for the system, the working of such transmitter-receivers as a whole being assumed to be known. Via an input 1 the calling code of the called station, in the example ZFST, is supplied to a control circuit 2, which supplies the calling code to a first store 3 in the positions indicated. All the other information in the store 3, which can contain at least eight blocks of three signals each, is permanently programmed. The store 3 moreover contains two blocks of three signals each, containing the calling code belonging to station QEMP, and four blocks of three signals each: RQ-α-α, RQ-α-β, RQ-β-α, and RQ-β-β. A second store 4 can contain a first and a second block of three traffic signals each, and moreover, it permanently contains at least three blocks of three signals each, to wit RQ-RQ-RQ, α-α-α and β-α-β. Via a switch 5 the blocks from the stores 3 and 4 can be supplied to a transmitter 6 under the control of the clock circuit 7. The working of the transmitter 6 and of the clock circuit 7 are assumed to be known. Under the control of the control circuit 2 the switch 5 is put in a position a during the calling phase, and in a position b during the traffic phase. The traffic signals are supplied via an input 8 to an input circuit 9, which in its turn sees to the recording of the traffic signals in the store 4. The working of the input circuit 9 is generally known from the telex-over-radio technique according to the ARQ-system and will not be further elucidated. A clearing signal can be given at an input 10, after which the signal block α-α-α from the store 4 can be supplied to the transmitter 6 via an OR-gate 11. Via an input 12 and an OR-gate 13 the signal block β-α-β can be led to the transmitter 6, in consequence of which the called station ZFST becomes information sending and the calling station QEMP information receiving. The signals received via a receiver 14 are supplied to an error detector 15 in the way as usual for an ARQ-system. The signals recognized as correct are led to a receiving unit 16; the reception of a signal with a disturbed parity is reported to the control circuit 2. As can be seen from the diagrams of Figs. 1 and 2 the receiver 14 of an information sending station exclusively receives the signals α, β, CS 1, CS 2, CS 3 and four signals which constitute the calling code of the called station.

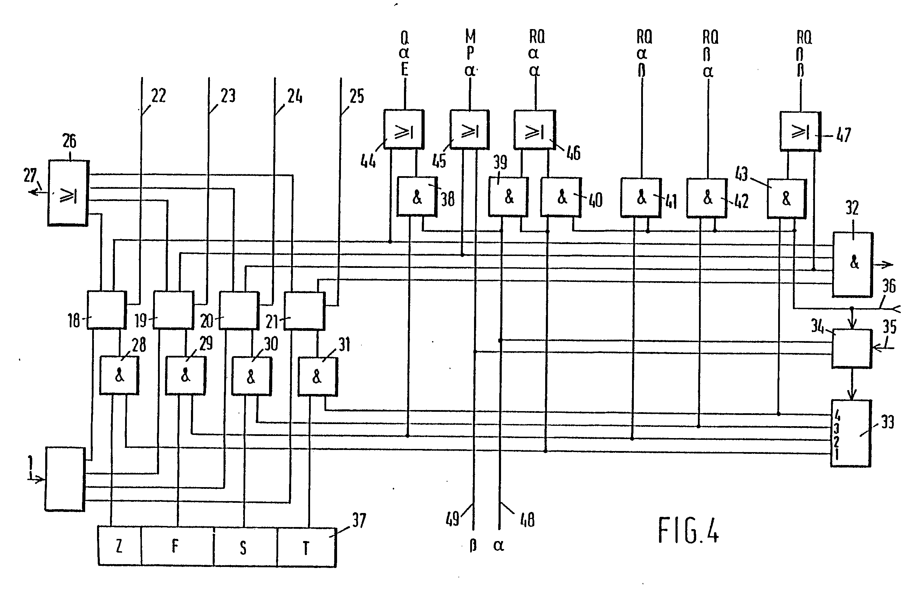

The signals α, β, CS 1, CS 2 and CS 3 can be recognized by the receiving unit 16. Other signals are passed on to the control unit 2. The working of the control unit 2 will be further explained with the help of Fig. 4. Fig. 4 shows an elaborate representation of the control circuit 2 (Fig. 3), into which the calling code of the called station is led in via the input 1. The four signals Z, F, S and T of the calling code are supplied via four respective store comparator circuits 18, 19, 20 and 21 to the connections 22, 23, 24 and 25 to be recorded in the store 3 (Fig. 3). The "no"-outputs of the comparator circuits 18, 19, 20 and 21 are connected to an OR-gate 26, which after having been activated can see to it that the signal block α-α-α will be transmitted from the store 4 (Fig. 3) via an output 27 and an OR-gate 11 (Fig. 3). An AND-gate 28, 29, 30 and 31 is connected to each of the comparator circuits 18, 19, 20 and 21, respectively. The output signal of said AND-gates is compared with the output signal occurring in the connections 22, 23, 24 and 25. When the signals of the AND-gates 28, 29, 30 and 31 correspond with the signals occurring in the connections 18, 19, 20 and 21, respectively, the four "yes"-outputs will activate an AND-gate 32, in consequence of which the switch 5 (Fig. 3) will be put in the traffic position (5b, Fig. 3). The AND-gates 28—31 are activated alternately by a counter 33, which can make steps in the rhythm of transmitting the signal blocks (450 msec) under the control of a gate circuit 34, which receives the clock pulses from the clock 7 (Fig. 3) via an input 35. The transit of the clock pulses through the gate circuit 34 will be stopped as soon as a signal from the error detector 15 (Fig. 3) indicating the reception of an incorrectly received signal, appears at an input 36. The signals supplied to the gates 28—31 originate from the store 37, which can form part of the store 16 (Fig. 3). For activating the storage positions having their own station code, and the signal blocks for asking for repetition during the calling phase there are AND-gates 38—43 and OR-gates 44—47. In the example the output of the gate 44 activates the signal block Q-α-E, and the output of gate 45 the signal block M-P-α; the outputs of the gates 46, 41, 42 and 47 can activate the storage positions in which the signal blocks RQ-α-α, RQ-α-β, RQ-β-α and RQ-β-β, respectively, are stored (see also store 3 Fig. 3). Moreover, the circuit is provided with the inputs 48 and 49, via which the presence of an α-signal and a β-signal, respectively, is reported.

Fig. 5 shows a block diagram of an information sending station in which via a receiving device 50, an error detector 51 and a switch 52.1 the received signal can be supplied to a recognition store 53 during the calling phase, and to a recognition store 54 during the traffic phase. Besides the station comprises an output circuit 55, a clock generator 56 and a transmitter 57 known in themselves. The signals permanently recorded in a store 58 can be supplied to the transmitter 57 via a switch 52.2. The switches 52.1 and 52.2 are shown in the calling phase position (a), in the traffic phase they are in position b. A control circuit 59 ensures the processing of traffic in the way as described above. The arrangement of the control circuit 59 is mutatis mutandis identical to that of the control circuit 2 (vide also Fig. 4). The working can be derived from the description belonging to Figs. 1 and 2 and will therefore not be further explained.

**Claims**

1. Simplex system for digital radio communication via ARQ-circuits, comprising,

— a calling transmitting-receiving station which every time transmits blocks (Z-RQ-F, S-T-RQ) of three signals, which blocks during the establishment of a connection together comprise inter alia four signals (Z, F, S, T) constituting an identification code (ZFST) of
— a called transmitting-receiving station which every time transmits one signal during the establishment of a connection after the recognition of the identification code (ZFST) belonging to this called station, and

wherein during the establishment of the connection the calling station every time transmits one block of three signals on receipt of every time one signal (Z, F, S, T) transmitted by the called station, these signals comprising inter alia the identification code (ZFST) of the called station, characterized in that the called station transmits on receipt of the blocks (Z-RQ-F, S-T-RQ) comprising the identification code (ZFST) of the called station, a single special signal (α) before transmitting the signals (Z, F, S, T) constituting its identification code (ZFST), in that on receipt of the special signal (α) the calling station transmits a special block (RQ-α-α) of signals, and in successive blocks (Q-α-E, M-P-α), signals which together constitute the identification code (QEMP) of the calling station.

2. System in accordance with claim 1, characterized in that whenever one signal (F) of the identification code (ZFST) of the called station is received mutilated ($\nabla$) by the calling station, this calling station transmits a special block (RQ-α-β) of signals (Fig. 2, $t_{19}$) instead of a block (M-P-α) of signals comprising signals (M, P) of the identification code (QEMP) of the calling station.

3. System in accordance with claim 2, characterized in that the information content of the special block of signals is dependent on the position of the signal transmitted by the called station and received mutilated ($\nabla$) by the calling station within the identification code (ZFST) of the called station.

**Revendications**

1. Système simplex pour la radiocommunication numérique via des circuits ARQ, comprenant:

— une station émettrice-réceptrice appelante qui émet chaque fois des blocs (Z-RQ-F, S-T-RQ) de trois signaux, blocs qui, pendant l'établissement d'une liaison, contiennent ensemble notamment quatre signaux (Z, F, S, T) constituant un code d'identification (ZFST) appartenant à
— une station émettrice-réceptrice appelée qui transmet chaque fois un signal pendant l'établissement d'une liaison, après la reconnaissance du code d'identification (ZFST) de cette station appelée, et

dans lequel, pendant l'établissement de la liaison, la station appelante transmet un bloc de trois signaux à réception de chaque fois un signal (Z, F, S, T) émis par la station appelée, ces signaux comprenant notamment le code d'identification (ZFST) de la station appelée, caractérisé en ce que la station appelée, à la réception des blocs (Z-RQ-F, S-T-RQ) contenant le code d'identification (ZFST) de la station appelée, transmet un seul signal spécial (α) avant de transmettre les signaux (Z, F, S, T) constituant son propre code d'identification (ZFST), et en ce que, à la réception du signal spécial (α), la station appelante transmet un bloc spécial (RQ-α-α) de signaux et, dans des blocs successifs (Q-α-E, M-P-α), des signaux qui constituent ensemble le code d'identification (QEMP) de la station appelante.

2. Système selon la revendication 1, caractérisé en ce que chaque fois un signal (F) du code d'identification (ZFST) de la station appelée est reçu mutilé ($\nabla$) par la station appelante, cette station appelante émet un bloc spécial (RQ-α-β) de signaux (figure 2, $t_{19}$) au lieu d'un bloc (M-P-α) de signaux comprenant des signaux (M, P) du code d'identification (QEMP) de la station appelante.

3. Système selon la revendication 2, caractérisé en ce que le contenu en informations du bloc spécial de signaux dépend de la position du signal émis par la station appelée et reçu mutilé ($\nabla$) par la station appelante dans le code d'identification (ZFST) de la station appelée.

**Patentansprüche**

1. Simplex-System zur digitalen Funk-Uebermittlung über ARQ-Kreise, umfassend

— eine anrufende Sende/Empfangsstation, die jedesmal Blöcke (Z-RQ-R, S-T-RQ) von drei Signalen übermittelt, welche Blöcke während der Herstellung einer Verbindung zusammen unter anderem vier Signale (Z, F, S, T) umfassen, die einen Identifikationscode bilden
— einer angerufenen Sende/Empfangsstation, die jedesmal während der Herstellung einer Verbindung nach dem Erkennen der ihr zugehörigen Identifikationscodes (ZFST) ein Signal übermittelt,

wobei während der Herstellung der Verbindung die anrufende Station jeweils nach Empfang des von der angerufenen Station übermittelten Einzelsignals (Z, F, S, T) einen Block von drei Signalen übermittelt, wobei diese Signale unter anderem den Identifikationscode (ZFST) der angerufenen Station enthalten, dadurch gekennzeichnet, dass die angerufene Station nach Empfang der den Identifikationscode (ZFST) der angerufenen Station enthaltenden Blöcke (Z-RQ-F, S-T-RQ) ein einzelnes Spezialsignal (α) übermittelt, bevor sie die ihren Identifikationscode (ZFST) bildenden Signale (Z, F, S, T) übermittelt, dass, nach Empfang diese Spezialsignals (α), die anrufende Station einen speziellen Block (RQ-α-α) von Signalen und in nachfolgenden Blöcken (Q-α-E, M-P-α) übermittelt, welche zusammen den Identifikationscode (QEMP) der anrufenden Station bilden.

2. System nach Anspruch 1, dadurch gekennzeichnet, dass jedesmal, wenn ein Signal (F) des Identifikationscodes (ZFST) der angerufenen Station entstellt (∇) durch die anrufende Station empfangen wurde, diese anrufende Station einen speziellen Block (RQ-α-β) von Signalen übermittelt (Fig. 2, t$_{19}$) anstelle eines Blocks (M-P-α) von Signalen umfassend Signale (M, P) des Identifikationscode (QEMP) der anrufenden Station.

3. System nach Anspruch 2, dadurch gekennzeichnet, dass der Informationsinhalt des speziellen Signalblocks abhängt von der Stellung innerhalb des Identifikationscodes (ZFST) der angerufenen Station des von der angerufenen Station übermittelten und durch die anrufende Station entstellt empfangenen (∇) Signals.

# FIG.1

FIG.2

**FIG.3**

Table 4:
| A | D | RQ | α | ß |
| B | E | RQ | α | α |
| C | ß | RQ | α | ß |

Table 3:
| Z | S | Q | M | RQ | RQ | RQ | RQ |
| RQ | T | α | P | α | α | ß | ß |
| F | RQ | E | α | α | ß | α | ß |

Table 16:
| C S 3 | C S 2 | C S 1 | Z | F | S | T | ß | α |

11  ≥1   ≥1  13
10
12
9
8
1
5
b
a
6
7
2
15  14  Y

**FIG.5**

Y  50  51  521  b  a

Table 53:
| M | Q | RQ | RQ | RQ | RQ | S | Z |
| P | α | ß | ß | α | α | T | RQ |
| α | E | ß | α | ß | α | RQ | F |

Table 54:
| ß | α | RQ | D | A |
| α | α | RQ | E | B |
| ß | α | RQ | ß | C |

Table 58:
| α | ß | Z | F | S | T | C S 1 | C S 2 | C S 3 |

56  59  55  57  52.2  a  b

3

FIG.4